# EUROPEAN PATENT APPLICATION

(11) **EP 4 725 750 A1**
(43) Date of publication of application: **15.04.2026**
(21) Application number: 24818973.0
(22) Date of filing: 15.02.2024
(51) Int. Cl.: B60L 53/62, B60L 53/14, H02J 7/00

(54) **POWER THEFT IDENTIFICATION METHOD, POWER THEFT IDENTIFICATION DEVICE, AND POWER THEFT IDENTIFICATION PROGRAM**

(30) Priority: 07.06.2023 JP 2023093636
(71) Applicant: Panasonic Intellectual Property Management Co., Ltd., Kadoma-shi, Osaka 571-0057 (JP)
(72) Inventor: KAGA, Tomoki, Kadoma-shi, Osaka 571-8501 (JP); YAMAGUCHI, Takahiro, Kadoma-shi, Osaka 571-8501 (JP); KOUNO, Yoshinobu, Kadoma-shi, Osaka 571-8501 (JP)
(74) Representative: Grünecker Patent- und Rechtsanwälte PartG mbB
(86) International application number: PCT/JP2024/005359
(87) International publication number: WO 2024/252734

(57) **Abstract**

An electricity theft identification device (20) includes an electricity theft detection unit (28A), an electricity theft likelihood determination unit (28B), and an electricity theft vehicle identification unit (28C). The electricity theft detection unit (28A) is configured to detect electricity theft based on a difference between the total amount of electric power supplied to a plurality of electric vehicles (12) that is calculated based on communication information including an electric power supply amount of the electric power supplied to each of the electric vehicles (12) connected to a plurality of chargers (10) and a measured electric power amount measured by an electric power meter (16) configured to measure an amount of the electric power supplied from a power supply (14) to the plurality of chargers (10). The electricity theft likelihood determination unit (28B) is configured to determine likelihood of electricity theft of each of the electric vehicles (12) connected to the plurality of chargers (10) based on temperature information of at least one of the charger (10) and the electric vehicle (12). The electricity theft vehicle identification unit (28C) is configured to identify, as an electricity theft vehicle, the electric vehicle (12) whose likelihood of electricity theft is determined to be a first level or higher when the electricity theft is detected.

## Description

### TECHNICAL FIELD

The present disclosure relates to an electricity theft identification method, an electricity theft identification device, and an electricity theft identification program.

### BACKGROUND ART

An electric vehicle (EV) charging station including a plurality of chargers is known. In the EV charging station, electric power is supplied to an electric vehicle connected to each of the plurality of chargers to charge a battery of the electric vehicle. The EV charging station is provided with an electric power meter that measures electric power supplied to the plurality of chargers, and the total amount of the electric power supplied to the plurality of chargers is measured. There is known a system that determines whether or not electricity theft has occurred by determining whether or not the measured amount of the electric power is equal to or greater than a threshold (see, for example, Patent Literature 1).

### CITATION LIST

### Patent Literature

Patent Literature 1: JP 2023-006755 A

### SUMMARY OF INVENTION

### PROBLEM TO BE SOLVED BY THE INVENTION

However, in the related art, it is difficult to identify which electric vehicle is an electricity theft vehicle.

A problem to be solved by the present disclosure is to provide an electricity theft identification device, an electricity theft identification method, and an electricity theft identification program capable of identifying an electricity theft vehicle.

### MEANS FOR SOLVING PROBLEM

An electricity theft identification method executed by an electricity theft identification device according to the present disclosure includes: an electricity theft detection step of detecting electricity theft based on a difference between a total amount of electric power supplied to a plurality of electric vehicles and a measured electric power amount, the total amount being calculated based on communication information including an amount of electric power supplied to each of the electric vehicles connected to a plurality of chargers, the measured electric power amount being measured by an electric power meter configured to measure an amount of the electric power supplied from a power supply to the plurality of chargers; an electricity theft likelihood determination step of determining likelihood of electricity theft of each of the electric vehicles connected to the plurality of chargers based on temperature information of at least one of the charger and the electric vehicle; and an electricity theft vehicle identifying step of identifying, as an electricity theft vehicle, the electric vehicle whose likelihood of electricity theft is determined to be a first level or higher when the electricity theft is detected.

### EFFECT OF THE INVENTION

With the electricity theft identification device, the electricity theft identification method, and the electricity theft identification program according to the present disclosure, it is possible to identify an electricity theft vehicle.

### BRIEF DESCRIPTION OF DRAWINGS

FIG. 1 is a schematic diagram of an example of an electric vehicle (EV) charging system according to an embodiment;
FIG. 2 is a schematic diagram of an example of a configuration of a charger;
FIG. 3 is a schematic diagram of an example of a configuration of an electric vehicle;
FIG. 4 is a schematic diagram of an example of a functional configuration of an electricity theft identification device;
FIG. 5A is a schematic diagram of an example of a data configuration of camera log management information;
FIG. 5B is a schematic diagram of an example of a data configuration of communication log management information;
FIG. 5C is a schematic diagram illustrating an example of a data configuration of measured electric power amount management information;
FIG. 5D is a schematic diagram of an example of a data configuration of determination result management information;
FIG. 6 is a sequence diagram illustrating an example of a flow of processing executed in the EV charging system;
FIG. 7 is a flowchart illustrating an example of a flow of information processing executed by the electricity theft identification device;
FIG. 8 is a flowchart illustrating an example of a flow of electricity theft likelihood determination processing executed by an electricity theft likelihood determination unit;
FIG. 9 is a flowchart illustrating an example of a flow of electricity theft vehicle identification processing executed by an electricity theft vehicle identification unit;
FIG. 10 is a flowchart illustrating an example of a flow of identifying result output processing executed by an output control unit; and
FIG. 11 is a block diagram illustrating a hardware configuration example of the electricity theft identification device.

### DESCRIPTION OF EMBODIMENTS

Hereinafter, embodiments of an electricity theft identification device, an electricity theft identification method, and an electricity theft identification program according to the present disclosure will be described with reference to the accompanying drawings.

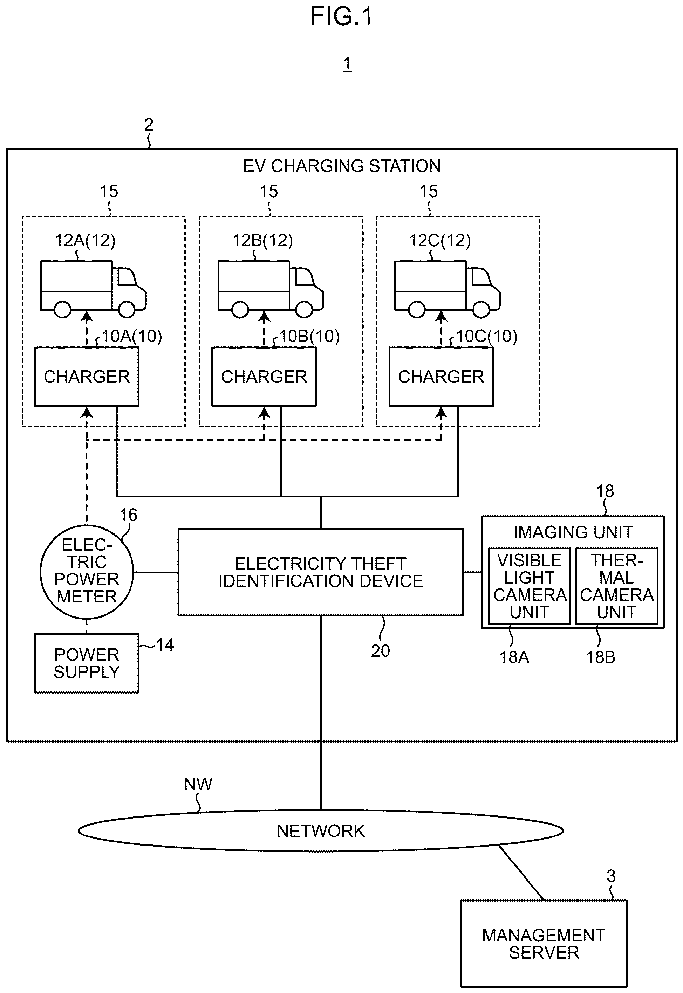

FIG. 1 is a schematic diagram of an example of an electric vehicle (EV) charging system 1 of the present embodiment.

The EV charging system 1 includes an EV charging station 2 and a management server 3. An electricity theft identification device 20 provided in the EV charging station 2 and the management server 3 are communicably connected via a network NW or the like.

The management server 3 is an information processing device that collectively manages one or more EV charging stations 2. The management server 3 is managed by, for example, a management company.

The EV charging station 2 is a charging facility for supplying electric power to a plurality of electric vehicles 12. The EV charging station 2 may also be referred to as a charging spot, a charging stand, or the like.

The EV charging station 2 includes a charger 10, a power supply 14, an electric power meter 16, an imaging unit 18, and the electricity theft identification device 20. The charger 10, the electric power meter 16, and the imaging unit 18 are communicably connected to the electricity theft identification device 20.

The EV charging station 2 is provided with a plurality of chargers 10. FIG. 1 illustrates, as an example, a configuration in which three chargers 10, chargers 10A to 10C, are provided. The number of chargers 10 provided in the EV charging station 2 may be plural and is not limited to three.

The charger 10 is equipment for supplying the electric power supplied from the power supply 14 to the electric vehicle 12 to charge the electric vehicle 12. For example, the charger 10 is connected to the electric vehicle 12 via an electric power supply cable, thereby supplying the electric power to the electric vehicle 12 via the electric power supply cable. Therefore, in the EV charging station 2, in each charging set 15 in which the charger 10 and the electric vehicle 12 are connected on a one-to-one basis, the electric power is supplied from the charger 10 belonging to each charging set 15 to the electric vehicle 12. That is, in the example illustrated in FIG. 1, the electric power is supplied to electric vehicles 12A to 12C from the chargers 10A to 10C connected to the electric vehicles 12A to 12C, respectively. Hereinafter, the chargers 10A to 10C are simply referred to as charger 10 when collectively referred to. The electric vehicles 12A to 12C are simply referred to as the electric vehicle 12 when collectively referred to.

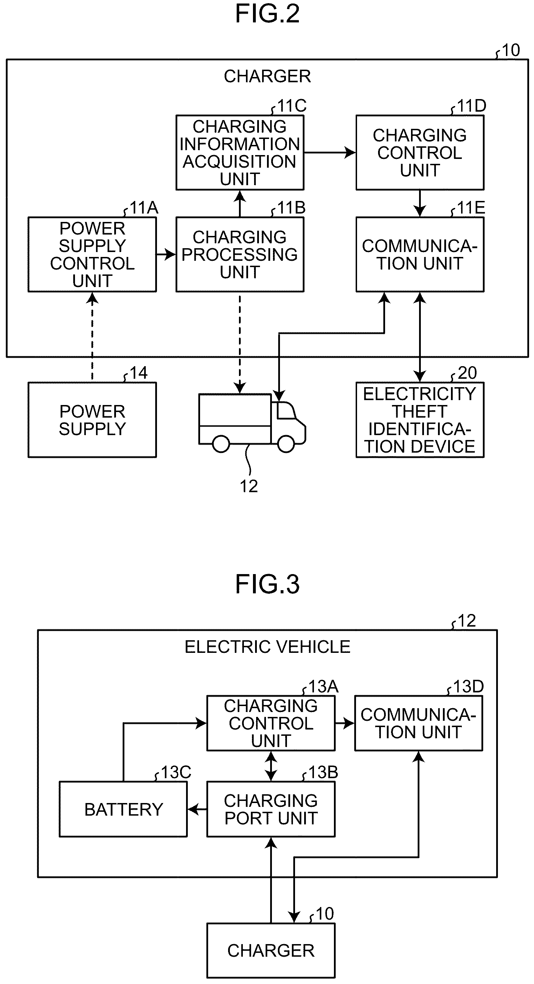

FIG. 2 is a schematic diagram of an example of a configuration of the charger 10.

The charger 10 includes a power supply control unit 11A, a charging processing unit 11B, a charging information acquisition unit 11C, a charging control unit 11D, and a communication unit 11E. The power supply control unit 11A supplies the electric power supplied from the power supply 14 to the electric vehicle 12 via the charging processing unit 11B. The charging processing unit 11B is an electric power supply interface for the electric vehicle 12. In addition, the charging processing unit 11B performs communication for charging between the electric vehicle 12 and the charger 10. In the communication between the electric vehicle 12 and the charger 10, the electric vehicle 12 performs communication of instruction values such as a current value and a voltage value for charging.

The charging information acquisition unit 11C acquires charging information including an electric power supply amount of the electric power supplied to the electric vehicle 12 connected to the charger 10 via the electric power supply cable, a vehicle ID of the electric vehicle 12, and the like. The charging control unit 11D generates communication information including the electric power supply amount of the electric power supplied to the electric vehicle 12, a charger ID of the charger 10, and the vehicle ID of the electric vehicle 12 based on the charging information acquired by the charging information acquisition unit 11C, and transmits the communication information to the electricity theft identification device 20 via the communication unit 11E. The charger ID is identification information of the charger 10. The vehicle ID is identification information of the electric vehicle 12. For example, an open charge point protocol (OCPP) is used as a communication protocol of the communication information transmitted from the charger 10 to the electricity theft identification device 20.

FIG. 3 is a schematic diagram of an example of a configuration of the electric vehicle 12.

The electric vehicle 12 is a vehicle that obtains a driving force by electric power stored in a battery 13C. The electric vehicle 12 includes a charging control unit 13A, a charging port unit 13B, the battery 13C, and a communication unit 13D. The charging control unit 13A charges the battery 13C with the electric power supplied from the charger 10 connected via the charging port unit 13B and the electric power supply cable. The communication unit 13D performs communication for charging between the electric vehicle 12 and the charger 10. Furthermore, the communication unit 13D transmits information including the vehicle ID of the electric vehicle 12, the electric power supply amount of the electric power supplied from the charger 10, and the like to the electric vehicle 12.

Returning to FIG. 1, the description continues.

The electric power meter 16 measures the amount of the electric power supplied from the power supply 14 to each of the plurality of chargers 10 provided in the EV charging station 2. That is, the electric power meter 16 measures the total amount of the electric power supplied from the power supply 14 to the plurality of chargers 10. The electric power meter 16 outputs a measured electric power amount, which is the measured amount of the electric power, to the electricity theft identification device 20.

The imaging unit 18 is an imaging device that images the inside of the EV charging station 2. An imaging range of the imaging unit 18 is adjusted in advance so as to be able to image all of the plurality of chargers 10 provided in the EV charging station 2 and the electric vehicle 12 connected to each of the plurality of chargers 10.

The imaging unit 18 includes a visible light camera unit 18A and a thermal camera unit 18B.

The visible light camera unit 18A is an imaging device that obtains captured image data obtained by imaging reflected light of visible light. The captured image data may be referred to as visible image data. An imaging range of the visible light camera unit 18A is adjusted in advance such that all of the plurality of chargers 10 provided in the EV charging station 2 and the plurality of electric vehicles 12 connected to the chargers 10 can be imaged as subjects. The visible light camera unit 18A sequentially images the subjects in time series and sequentially outputs the captured image data obtained by imaging to the electricity theft identification device 20.

The thermal camera unit 18B is an imaging device capable of detecting a temperature in an imaging range.

The thermal camera unit 18B may be referred to as a far infrared camera, a thermographic camera, a thermal camera, or the like. An imaging angle of view, an imaging posture, or the like of the visible light camera unit 18A is adjusted in advance such that the plurality of chargers 10 provided in the EV charging station 2 and the plurality of electric vehicles 12 connected to the chargers 10 can be imaged as subjects, and the same imaging range as that of the visible light camera unit 18A can be imaged in the same posture. The thermal camera unit 18B sequentially images the subjects in time series and sequentially outputs thermal image data in which temperature information is defined for each pixel to the electricity theft identification device 20. The thermal image data may be referred to as thermography.

Next, the electricity theft identification device 20 will be described. The electricity theft identification device 20 is an information processing device for identifying an electricity theft vehicle in the EV charging station 2.

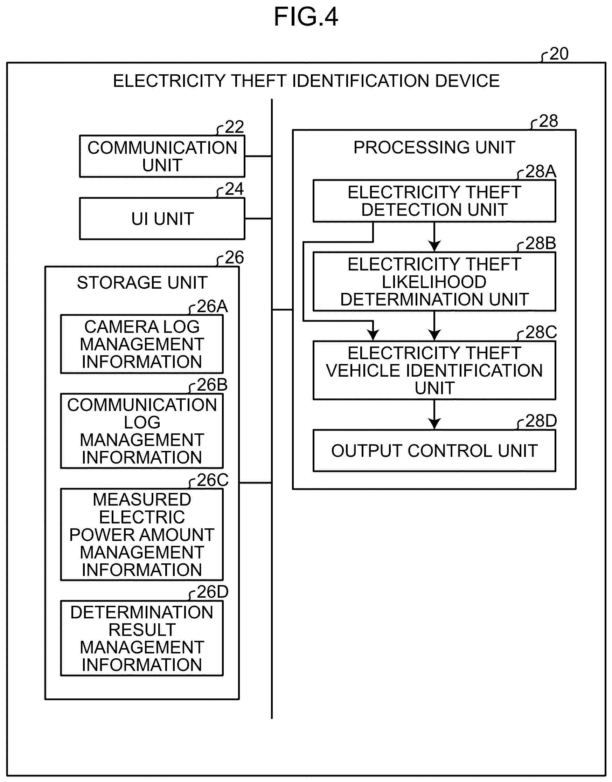

FIG. 4 is a schematic diagram of an example of a functional configuration of the electricity theft identification device 20.

The electricity theft identification device 20 includes a communication unit 22, a user interface (UI) unit 24, a storage unit 26, and a processing unit 28. The communication unit 22, the UI unit 24, the storage unit 26, and the processing unit 28 are communicably connected via a bus or the like.

The communication unit 22 is a communication function unit for communicating with the charger 10, the electric power meter 16, the imaging unit 18, the management server 3, and the like. As described above, the communication unit 22 uses, for example, the OCPP as the communication protocol for communication with the charger 10.

The UI unit 24 has a display function and an input function. The display function displays various types of information. The display function is, for example, a display or a projection device. The input function receives an operation input from a user. The input function is, for example, a pointing device such as a mouse or a touch pad, or a keyboard. A touch panel in which the display function and the input function are integrated may be used. The storage unit 26 stores various types of information.

It is sufficient if the UI unit 24 and the storage unit 26 are communicably connected to the processing unit 28 in a wired or wireless manner. At least one of the UI unit 24 and the storage unit 26 may be connected to the processing unit 28 via the network NW or the like.

In addition, at least one of the UI unit 24 and the storage unit 26 may be provided outside the electricity theft identification device 20. Furthermore, the UI unit 24, the storage unit 26, and at least one of one or more functional units included in the processing unit 28 may be mounted on an external information processing device communicably connected to the processing unit 28 via the network NW or the like.

The storage unit 26 stores various types of data. In the present embodiment, the storage unit 26 stores, for example, camera log management information 26A, communication log management information 26B, measured electric power amount management information 26C, and determination result management information 26D. The camera log management information 26A, the communication log management information 26B, the measured electric power amount management information 26C, and the determination result management information 26D are registered and updated by the processing unit 28 described below.

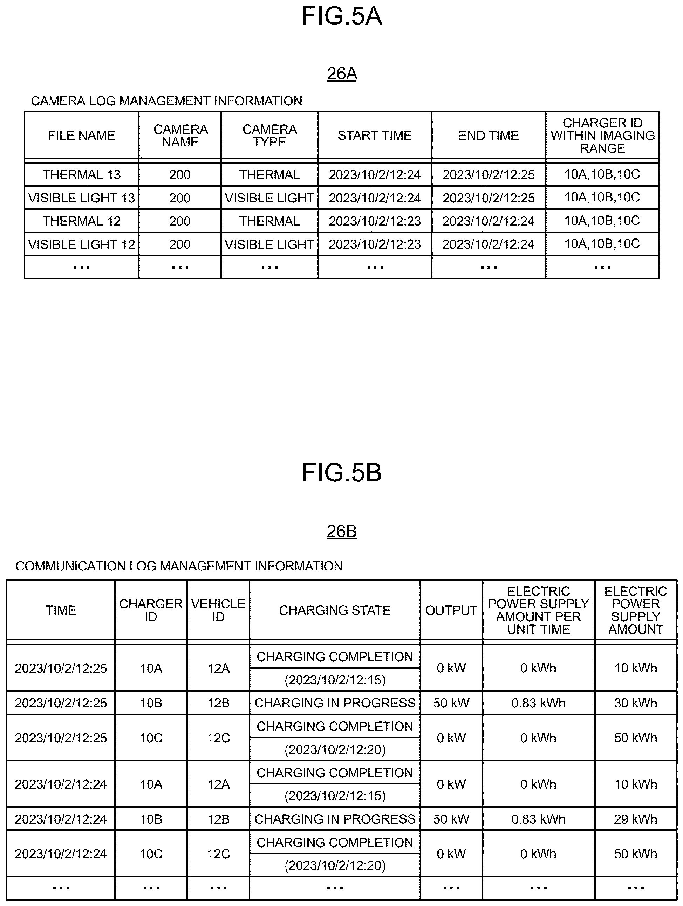

FIG. 5A is a schematic diagram of an example of a data configuration of the camera log management information 26A. The camera log management information 26A is a database for managing the captured image data captured by the visible light camera unit 18A and the thermal image data captured by the thermal camera unit 18B. A data format of the camera log management information 26A may be a table or the like and is not limited to a database.

For example, the camera log management information 26A is a database in which a file name, a camera name, a camera type, a start time, an end time, and the charger ID of the charger 10 within the imaging range are associated with each other.

The file name in the camera log management information 26A indicates file names of the captured image data and the thermal image data. The camera name indicates a name of the imaging unit 18 that has captured the captured image data or the thermal image data identified by the corresponding file name. The camera type indicates a type of the imaging unit 18 that has captured the captured image data or the thermal image data identified by the corresponding file name. In the present embodiment, a mode in which either "visible light" representing the visible light camera unit 18A or "thermal" representing the thermal camera unit 18B is registered as the camera type is illustrated as an example. The start time and the end time represent an imaging start time and an imaging end time for the captured image data or the thermal image data identified by the corresponding file name. The charger ID within the imaging range represents the identification information of the charger 10 present in the imaging range of the captured image data or the thermal image data identified by the corresponding file name.

FIG. 5B is a schematic diagram of an example of a data configuration of the communication log management information 26B. The communication log management information 26B is a database for managing the communication information received from each of the plurality of chargers 10. A data format of the communication log management information 26B may be a table or the like and is not limited to a database.

For example, the communication log management information 26B is a database in which a time, the charger ID, the vehicle ID, a charging state, an output, an electric power supply amount per unit time, and the electric power supply amount are associated with each other.

The time in the communication log management information 26B indicates a time at which the communication information is received. The charger ID is identification information of the charger 10. The vehicle ID is identification information of the electric vehicle 12 connected to the charger 10 identified by the corresponding charger ID. The charging state represents a charging state of the charger 10 identified by the corresponding identification information for the electric vehicle 12. The charging state is expressed as, for example, "charging in progress" or "charging completion". In a case where the charging state is "charging completion", a charging completion time is further registered in the communication log management information 26B. The output represents an amount of the electric power output from the charger 10 identified by the corresponding charger ID to the electric vehicle 12. The electric power supply amount per unit time represents an electric power supply amount per unit time from the charger 10 identified by the corresponding charger ID to the electric vehicle 12. The unit time is, for example, one minute, but is not limited thereto. The electric power supply amount represents an electric power supply amount of the electric power from the charger 10 identified by the corresponding identification information to the electric vehicle 12 from the start of charging to the completion of charging.

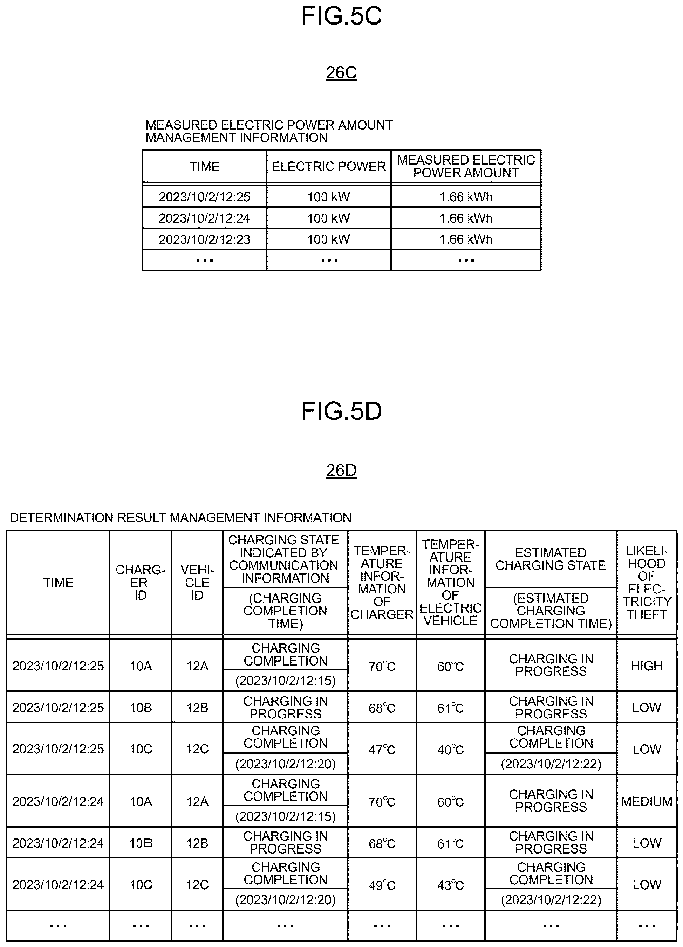

FIG. 5C is a schematic diagram illustrating an example of a data configuration of the measured electric power amount management information 26C. The measured electric power amount management information 26C is a database for managing the measured electric power amount measured by the electric power meter 16. A data format of the measured electric power amount management information 26C may be a table or the like and is not limited to a database.

For example, the measured electric power amount management information 26C is a database in which a time, the electric power, and the measured electric power amount are associated with each other. The time indicates a time at which the electric power meter 16 performs the measurement. The electric power in the measured electric power amount management information 26C represents the output amount of the electric power. The measured electric power amount indicates a measured electric power amount per unit time (a time interval at which the measured electric power amount management information 26C is output) measured by the electric power meter 16 at the corresponding time.

FIG. 5D is a schematic diagram of an example of a data configuration of the determination result management information 26D. The determination result management information 26D is a database for managing a determination result of processing described below in the processing unit 28. A data format of the determination result management information 26D may be a table or the like and is not limited to a database.

For example, the determination result management information 26D is a database in which a time, the charger ID, the vehicle ID, the charging state indicated by the communication information, temperature information of the charger 10, temperature information of the electric vehicle 12, an estimated charging state, and likelihood of electricity theft are associated with each other. The charging state indicated by the communication information indicates a state of charging of the electric vehicle 12 by the charger 10 determined by analysis of the communication information by the processing unit 28 described below. As described above, the charging state is expressed as "charging completion" or "charging in progress", and in the case of "charging completion", the charging completion time is registered. The temperature information of the charger is temperature information indicating a temperature of the charger 10. The temperature information of the electric vehicle is temperature information indicating a temperature of the electric vehicle 12. The estimated charging state represents a charging state estimated by the processing unit 28 described below using at least one of the temperature information of the charger 10 and the temperature information of the electric vehicle 12. The likelihood of electricity theft represents likelihood of electricity theft by the electric vehicle 12 identified by the corresponding vehicle ID.

The camera log management information 26A, the communication log management information 26B, the measured electric power amount management information 26C, and the determination result management information 26D are registered and updated by the processing unit 28 described below.

Returning to FIG. 4, the description continues.

The processing unit 28 executes information processing in the electricity theft identification device 20. The processing unit 28 includes an electricity theft detection unit 28A, an electricity theft likelihood determination unit 28B, an electricity theft vehicle identification unit 28C, and an output control unit 28D.

The electricity theft detection unit 28A, the electricity theft likelihood determination unit 28B, the electricity theft vehicle identification unit 28C, and the output control unit 28D are implemented by, for example, one or more processors. For example, each of the above units may be implemented by causing a processor such as a central processing unit (CPU) to execute a program, that is, by software. Each of the above units may be implemented by a processor such as a dedicated integrated circuit (IC), that is, hardware. Each of the above units may be implemented by using software and hardware in combination. In the case of using a plurality of processors, each processor may implement one of the respective units or may implement two or more of the respective units.

The electricity theft detection unit 28A detects the electricity theft based on a difference between the total amount of the electric power supplied to the plurality of electric vehicles 12 that is calculated based on the communication information including the electric power supply amount of the electric power supplied to each of the electric vehicles 12 connected to the plurality of chargers 10 and the measured electric power amount measured by the electric power meter 16 that measures the amount of the electric power supplied from the power supply 14 to the plurality of chargers 10.

Specifically, every time the electricity theft detection unit 28A receives the communication information from each of the plurality of chargers 10, a time at which the communication information is received, the charger ID of the charger 10 that is a transmission source of the communication information, the vehicle ID of the electric vehicle 12 connected to the charger 10 by the electric power supply cable, the output, the electric power supply amount per unit time, and the electric power supply amount are sequentially registered in the communication log management information 26B in association with each other. In addition, in a case where the electric power supply amount per unit time included in the communication information is 0 kWh, the electricity theft detection unit 28A registers "charging completion" as the charging state. In addition, in a case where the charging state at the time of previously receiving the communication information has changed from "charging in progress" to "charging completion", the electricity theft detection unit 28A registers a time at which the communication information is received as the charging completion time in the communication log management information 26B, and in a case other than such a case where the charging state has changed, the electricity theft detection unit 28A registers the charging completion time registered at the time of previously receiving the communication information in the communication log management information 26B. In addition, in a case where the electric power supply amount per unit time included in the communication information is a value exceeding 0 kWh, the electricity theft detection unit 28A registers "charging in progress" as the charging state in the communication log management information 26B.

In addition, every time the measured electric power amount is received from the electric power meter 16, the electricity theft detection unit 28A registers a time at which the measured electric power amount is received and the received measured electric power amount in the measured electric power amount management information 26C in association with each other.

Then, in a case where the difference between the total amount of the supplied electric power, which is the total value of the electric power supply amounts included in the pieces of communication information received at the same time from the plurality of chargers 10 provided in the EV charging system 1, and the measured electric power amount received from the electric power meter 16 at that time is equal to or smaller than a threshold, the electricity theft detection unit 28A determines that there is no electricity theft at that time. The expression "communication information received at the same time" is not limited to a case where times at which the pieces of communication information are received are the same as each other, and it is sufficient if the pieces of communication information are received within a predetermined time range. On the other hand, in a case where the difference exceeds the threshold, the electricity theft detection unit 28A determines that the electricity theft has occurred at that time, and detects the electricity theft at that time. That is, since there is a case where the communication information is falsified and the electricity theft occurs, the electricity theft is detected by the electricity theft detection unit 28A using the total amount of the supplied electric power, which is the total value of the electric power supply amounts included in the pieces of communication information received from the plurality of chargers 10, and the measured electric power amount. As the threshold used for the detection of the electricity theft, a value capable of determining whether or not the electricity theft has occurred may be determined in advance. Furthermore, the threshold may be appropriately changeable by the user operating the UI unit 24 or the like.

The electricity theft likelihood determination unit 28B determines the likelihood of electricity theft of each of the chargers 10 connected to the plurality of chargers 10 based on the temperature information of at least one of the charger 10 and the electric vehicle 12.

Specifically, every time the captured image data and the thermal image data are acquired from the imaging unit 18, the electricity theft likelihood determination unit 28B performs image analysis by a known method. The electricity theft likelihood determination unit 28B identifies the temperature information defined by a pixel value of a corresponding portion in the thermal image data for each of the plurality of chargers 10 and the plurality of electric vehicles 12 included in the captured image data by the image analysis. By such identification processing, the electricity theft likelihood determination unit 28B acquires the temperature information of each of the plurality of chargers 10 present in the EV charging station 2 and each of the electric vehicles 12 connected to the plurality of chargers 10. Then, the electricity theft likelihood determination unit 28B registers, in the determination result management information 26D, the charger ID of the charger 10, the vehicle ID of the electric vehicle 12 connected to the charger 10, and the temperature information of each of the charger 10 and the electric vehicle 12 analyzed from the captured image data and the thermal image data in association with a time at which the captured image data and the thermal image data are acquired.

Further, the electricity theft likelihood determination unit 28B estimates the estimated charging state of each of the plurality of chargers 10 for the electric vehicle 12 based on the temperature information of at least one of the charger 10 and the electric vehicle 12 identified from the captured image data and the thermal image data. The estimated charging state indicates the charging state estimated from the temperature information of at least one of the charger 10 and the electric vehicle 12.

Here, in a case where the charging state is charging in progress, the charger 10 and the electric vehicle 12 have temperatures higher than a predetermined temperature, and when the charging state transitions from charging in progress to charging completion, the temperatures of the charger 10 and the electric vehicle 12 decrease as compared with a case where the charging state is charging in progress and are lower than those when the charging state is charging in progress.

Therefore, in a case where the temperature of the charger 10 indicated by the temperature information is equal to or lower than a first predetermined temperature, the electricity theft likelihood determination unit 28B estimates that the estimated charging state is "charging completion". As the first predetermined temperature, it is sufficient if a threshold of a temperature by which it can be determined whether or not the charging state is charging in progress is set in advance. Furthermore, the first predetermined temperature may be appropriately changeable according to an operation instruction or the like made by the user through the UI unit 24. In the present embodiment, a mode in which the first predetermined temperature is 30°C will be described as an example.

In addition, in a case where the temperature of the charger 10 indicated by the temperature information is higher than the first predetermined temperature and has decreased by at least a second predetermined temperature from a temperature at a predetermined time earlier, the electricity theft likelihood determination unit 28B estimates that the estimated charging state is "charging completion". It is sufficient if the second predetermined temperature is a value by which the temperature decreases when the charging state transitions from "charging in progress" to "charging completion". It is sufficient if a temperature lower than the first predetermined temperature is set as the second predetermined temperature. The second predetermined temperature is, for example, 20°C, but is not limited thereto. As the predetermined time, it is sufficient if a time required for a temperature decrease by the second predetermined temperature when the estimated charging state transitions from "charging in progress" to "charging completion" is determined. The predetermined time is, for example, 10 minutes, but is not limited thereto.

In a case where the temperature of the charger 10 indicated by the temperature information is higher than the first predetermined temperature and the temperature has not decreased by at least the second predetermined temperature from the temperature at the predetermined time earlier, the electricity theft likelihood determination unit 28B determines that the estimated charging state is "charging in progress".

In a case where it is estimated that the estimated charging state is "charging completion", the electricity theft likelihood determination unit 28B identifies, as an estimated charging completion time, a time at which the temperature indicated by the temperature information of the charger 10 starts to decrease following a preceding increase.

The electricity theft likelihood determination unit 28B registers a determination result of the estimated charging state and the estimated charging completion time in the determination result management information 26D (see FIG. 5D).

Next, the electricity theft likelihood determination unit 28B identifies the charging state of the charger 10 from the communication information received from the charger 10. The electricity theft likelihood determination unit 28B may identify the charging state of the charger 10 by identifying the charging state registered in the communication log management information 26B by the electricity theft detection unit 28A based on the communication information.

Then, the electricity theft likelihood determination unit 28B determines the likelihood of electricity theft of each of the electric vehicles 12 connected to the plurality of chargers 10 based on a comparison result between the charging state of the charger 10 indicated by the communication information and the estimated charging state estimated from the temperature information of the charger 10.

For example, for the electric vehicle 12 connected to the charger 10 in which the charging state identified from the communication information received from the charger 10 and the estimated charging state estimated from the temperature information both indicate "charging completion", the electricity theft likelihood determination unit 28B determines that the likelihood of electricity theft is higher as a time difference between the charging completion time indicated by the communication information and the estimated charging completion time estimated from the temperature information is larger. In the present embodiment, a mode in which the electricity theft likelihood determination unit 28B determines whether the likelihood of electricity theft is "low", "medium", or "high" according to the time difference will be described as an example.

Specifically, for example, for the electric vehicle 12 connected to the charger 10 in which the charging state identified from the communication information and the estimated charging state estimated from the temperature information both indicate "charging completion", the electricity theft likelihood determination unit 28B determines that the likelihood of electricity theft is "high" in a case where the time difference between the charging completion time indicated by the communication information and the estimated charging completion time estimated from the temperature information is equal to or longer than a first time duration. The first time duration is, for example, 10 minutes, but is not limited thereto. Furthermore, in a case where the difference is equal to or longer than a second time duration, the electricity theft likelihood determination unit 28B determines that the likelihood of electricity theft is "medium". The second time duration may be shorter than the first time duration. The second time duration is, for example, five minutes, but is not limited thereto. Furthermore, in a case where the difference is shorter than the second time duration, the electricity theft likelihood determination unit 28B determines that the likelihood of electricity theft is "low".

In addition, in a case where the charging state identified from the communication information received from the charger 10 indicates "charging in progress", the electricity theft likelihood determination unit 28B determines that the likelihood of electricity theft of the electric vehicle 12 connected to the charger 10 is "low".

Furthermore, in a case where the charging state identified from the communication information received from the charger 10 indicates "charging completion" and the estimated charging state estimated from the temperature information indicates "charging in progress", the electricity theft likelihood determination unit 28B determines that the likelihood of electricity theft of the electric vehicle 12 connected to the charger 10 is higher as an elapsed time from the charging completion time indicated by the communication information increases.

Specifically, for example, for the electric vehicle 12 connected to the charger 10 in which the charging state identified from the communication information indicates "charging completion" and the estimated charging state estimated from the temperature information indicates "charging in progress", the electricity theft likelihood determination unit 28B determines that the likelihood of electricity theft is "high" in a case where the time difference between the charging completion time indicated by the communication information and the estimated charging completion time estimated from the temperature information is equal to or longer than the first time duration. In addition, in a case where the time difference is shorter than the first time duration and is equal to or longer than the second time duration, the electricity theft likelihood determination unit 28B determines that the likelihood of electricity theft of the electric vehicle 12 connected to the charger 10 is "medium". In addition, in a case where the time difference is shorter than the first time duration and is shorter than the second time duration, the electricity theft likelihood determination unit 28B determines that the likelihood of electricity theft of the electric vehicle 12 connected to the charger 10 is "low".

In the present embodiment, a mode in which the electricity theft likelihood determination unit 28B determines the likelihood of electricity theft in three levels of "high", "medium", and "low" will be described as an example. However, the electricity theft likelihood determination unit 28B may determine the likelihood of electricity theft in four or more levels represented by numerical values or the like.

The electricity theft likelihood determination unit 28B may identify the estimated charging state and the estimated charging completion time by similar processing to that described above using the temperature information of the electric vehicle 12 connected to the charger 10 instead of the temperature information of the charger 10. Then, the electricity theft likelihood determination unit 28B may determine the likelihood of electricity theft in a similar manner to that as described above.

In addition, the electricity theft likelihood determination unit 28B may determine the likelihood of electricity theft by using both the temperature information of the charger 10 and the temperature information of the electric vehicle 12 connected to the charger 10. In this case, the electricity theft likelihood determination unit 28B determines the likelihood of electricity theft of each of the electric vehicles 12 connected to the chargers 10 by processing using the temperature information of the charger 10 and the temperature information of the electric vehicle 12. Then, it is sufficient if the electricity theft likelihood determination unit 28B compares the likelihood of electricity theft determined using the temperature information of the charger 10 with the likelihood of electricity theft determined using the temperature information of the electric vehicle 12 for each of the plurality of chargers 10, and uses a higher likelihood of electricity theft as the likelihood of electricity theft of the electric vehicle 12 connected to the charger 10.

Next, the electricity theft vehicle identification unit 28C will be described.

When the electricity theft is detected by the electricity theft detection unit 28A, the electricity theft vehicle identification unit 28C identifies, as an electricity theft vehicle, the electric vehicle 12 whose likelihood of electricity theft is determined to be a first level or higher. In addition, the electricity theft vehicle identification unit 28C identifies, as a candidate for the electricity theft vehicle, the electric vehicle 12 whose likelihood of electricity theft is determined to be lower than the first level and equal to or higher than a second level lower than the first level.

Specifically, in the present embodiment, the electricity theft vehicle identification unit 28C identifies, as the electricity theft vehicle, the electric vehicle 12 whose likelihood of electricity theft is determined to be "high" by the electricity theft likelihood determination unit 28B. In addition, the electricity theft vehicle identification unit 28C identifies, as the candidate for the electricity theft vehicle, the electric vehicle 12 whose likelihood of electricity theft is determined to be "medium". Specifically, the electricity theft vehicle identification unit 28C determines whether or not a difference between a current total supply amount and the measured electric power amount is equal to or smaller than a threshold in a case where the electric vehicle 12 whose likelihood of electricity theft is determined to be "high" is not included in the electric vehicles 12 connected to the plurality of chargers 10 in the EV charging station 2. It is sufficient if the threshold is set in advance. In a case where it is determined that the difference is equal to or smaller than the threshold, the electricity theft vehicle identification unit 28C identifies, as the candidate for the electricity theft vehicle, the electric vehicle 12 whose likelihood of electricity theft is determined to be "medium".

Next, the output control unit 28D will be described.

The output control unit 28D outputs a identification result of the electricity theft vehicle identification unit 28C.

Specifically, the output control unit 28D determines whether or not the electric vehicle 12 identified as the electricity theft vehicle by the electricity theft vehicle identification unit 28C is present in the EV charging station 2. For example, the output control unit 28D performs image analysis on the captured image data captured by the visible light camera unit 18A by a known image analysis method, and determines whether or not the electric vehicle 12 having the identification information corresponding to the vehicle ID of the electric vehicle 12 identified as the electricity theft vehicle is included in the captured image data.

In a case where the electric vehicle 12 identified as the electricity theft vehicle is present in the EV charging station 2 and is being supplied with the electric power, the output control unit 28D controls the charger 10 so as to stop the supply of the electric power from the charger 10 connected to the electric vehicle 12 via the electric power supply cable to the electric vehicle 12. Specifically, for example, the output control unit 28D transmits, to the charger 10 via the communication unit 22, stop request information instructing to stop the supply of the electric power to the electric vehicle 12. Upon receiving the stop request information from the electricity theft identification device 20, the charger 10 stops the supply of the electric power to the electric vehicle 12 connected via the electric power supply cable. Then, the output control unit 28D locks the electric power supply cable connecting the electric vehicle 12 and the charger 10. Specifically, the output control unit 28D locks the electric power supply cable connecting the electric vehicle 12 and the charger 10 such that the electric power supply cable cannot be removed from the electric vehicle 12.

Then, the output control unit 28D generates alert information including the identification result of the electricity theft vehicle identification unit 28C, the captured image data from the charging start time to the charging completion time of the electric vehicle 12 identified as the electricity theft vehicle, the electric power supply amount indicated by the communication information, and the measured electric power amount.

The output control unit 28D generates the alert information also for the electric vehicle 12 identified as the candidate for the electricity theft vehicle by the electricity theft vehicle identification unit 28C, similarly to the electric vehicle 12 identified as the electricity theft vehicle.

In addition, in a case where there is no electric vehicle 12 identified as the electricity theft vehicle or the candidate for the electricity theft vehicle, the output control unit 28D identifies all the electric vehicles 12 present in the EV charging station 2 when the electricity theft is detected by the electricity theft detection unit 28A. Similarly to the above, it is sufficient if the output control unit 28D identifies the electric vehicle 12 by the image analysis of the captured image data captured by the visible light camera unit 18A. Then, the output control unit 28D generates the alert information including the captured image data from the charging start time to the charging completion time of each of all the electric vehicles 12 present in the EV charging station 2 when the electricity theft is detected by the electricity theft detection unit 28A, the electric power supply amount indicated by the communication information, and the measured electric power amount.

The output control unit 28D outputs the generated alert information. Specifically, the output control unit 28D stores the generated alert information in the storage unit 26. In addition, the output control unit 28D displays the generated alert information on the UI unit 24. In addition, the output control unit 28D transmits the generated alert information to the management server 3 via the communication unit 22 and the network NW. The transmission of the alert information to the management server 3 by the output control unit 28D is not essential, and the alert information does not have to be transmitted to the management server 3.

Next, an example of a flow of processing executed in the EV charging system 1 will be described.

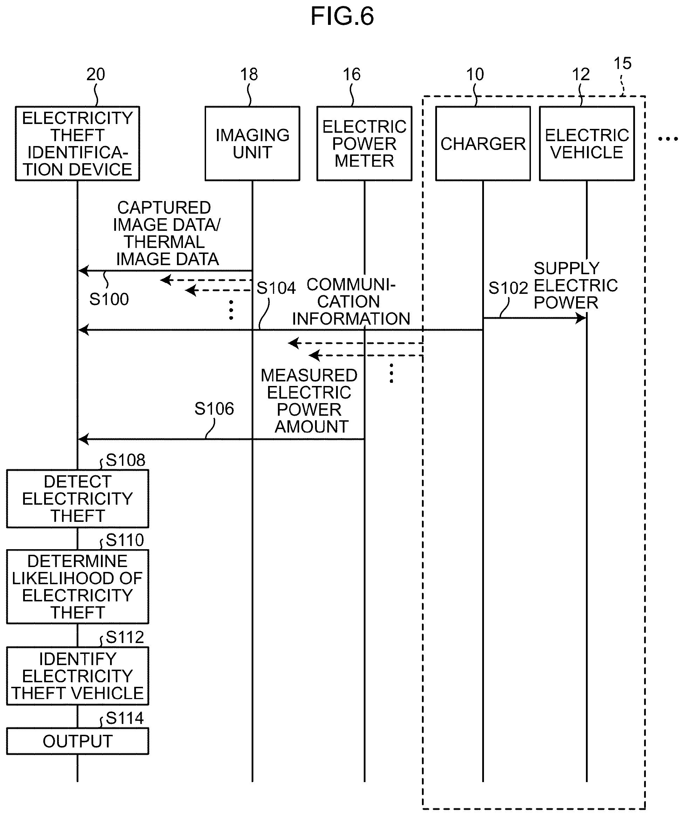

FIG. 6 is a sequence diagram illustrating an example of a flow of processing executed in the EV charging system 1.

The imaging unit 18 sequentially outputs the captured image data and the thermal image data to the electricity theft identification device 20 (Step S100). When the electric power is supplied from the charger 10 to the electric vehicle 12 (Step S102), the charger 10 outputs the communication information including at least the electric power supply amount and the charger ID to the electricity theft identification device 20 (Step S104). The electric power meter 16 outputs the measured electric power amount to the electricity theft identification device 20 (Step S106).

The electricity theft detection unit 28A calculates the total amount of the electric power supplied to the electric vehicles 12 connected to the plurality of chargers 10 in the EV charging station 2 based on the communication information received from each of the plurality of chargers 10. The electricity theft detection unit 28A detects the electricity theft based on the difference between the total amount of the supplied electric power and the measured electric power amount (Step S108).

The electricity theft likelihood determination unit 28B determines the likelihood of electricity theft of the electric vehicle 12 connected to each of the plurality of chargers 10 based on the temperature information of at least one of the charger 10 and the electric vehicle 12 (Step S110).

When the electricity theft is detected, the electricity theft vehicle identification unit 28C identifies, as the electricity theft vehicle, the charger 10 whose likelihood of electricity theft is determined to be the first level or higher (Step S112).

The output control unit 28D outputs the identification result of the electricity theft vehicle identification unit 28C (Step S114). Then, this routine ends.

Next, an example of a flow of information processing executed by the electricity theft identification device 20 of the present embodiment will be described.

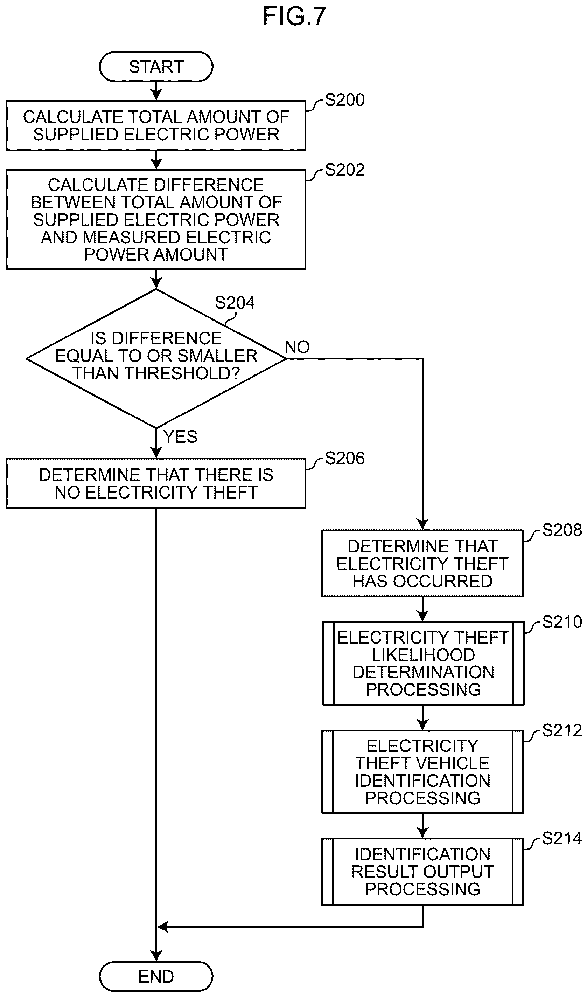

FIG. 7 is a flowchart illustrating an example of the flow of the information processing executed by the electricity theft identification device 20.

The electricity theft detection unit 28A calculates the total value of the electric power supply amounts included in the plurality of pieces of communication information as the total amount of the electric power supplied to the plurality of electric vehicles 12 based on the pieces of communication information received from the plurality of chargers 10 at the same time (Step S200).

The electricity theft detection unit 28A calculates the difference between the total amount of the supplied electric power calculated in Step S200 and the measured electric power amount acquired from the electric power meter 16 at the same time as the communication information used for the calculation in Step S200 (Step S202).

The electricity theft detection unit 28A determines whether or not the difference calculated in Step S200 is equal to or smaller than the threshold (Step S204). In a case where it is determined that the difference is equal to or smaller than the threshold (Step S206), the electricity theft detection unit 28A determines that there is no electricity theft (Step S206), and ends this routine. In a case where it is determined that the difference is larger than the threshold (Step S204: No), the electricity theft detection unit 28A determines that the electricity theft has occurred (Step S208). That is, in Step S208, the electricity theft detection unit 28A detects the electricity theft.

The electricity theft likelihood determination unit 28B executes electricity theft likelihood determination processing and determines the likelihood of electricity theft of each of the plurality of electric vehicles 12 (Step S210). The electricity theft vehicle identification unit 28C executes electricity theft vehicle identification processing of identifying the electricity theft vehicle by using a result of determining the likelihood of electricity theft (Step S212). The output control unit 28D executes identification result output processing of outputting the identification result of the electricity theft vehicle identification unit 28C (Step S214). Details of the processing of steps S210 to S214 are described below. Then, this routine ends.

An example of a detailed flow of the electricity theft likelihood determination processing executed by the electricity theft likelihood determination unit 28B, which is represented by Step S210 in FIG. 7, will be described.

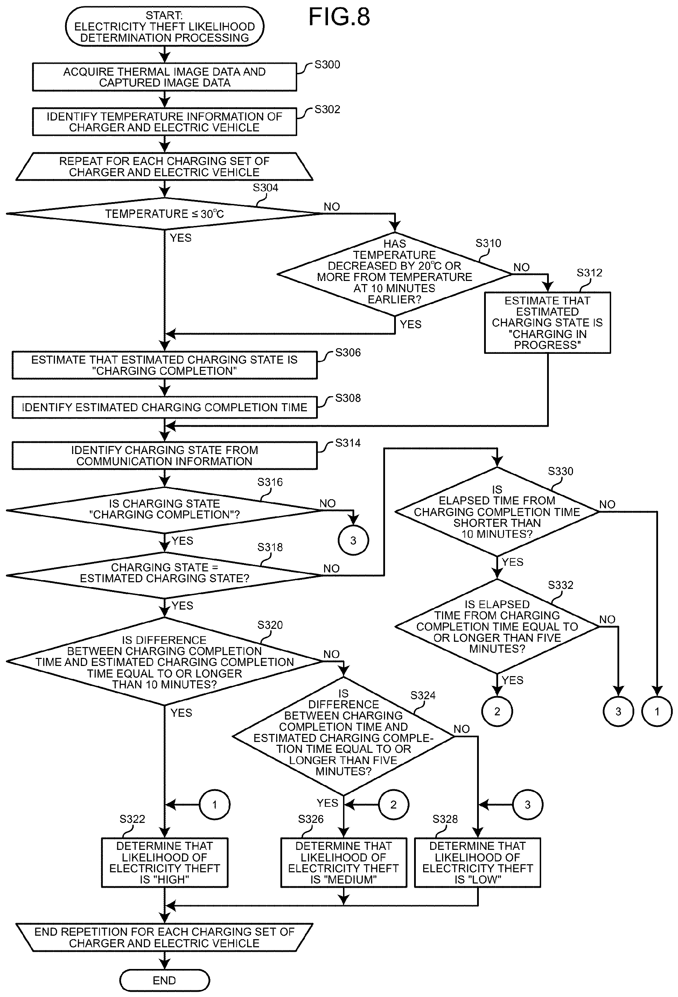

FIG. 8 is a flowchart illustrating an example of the flow of the electricity theft likelihood determination processing executed by the electricity theft likelihood determination unit 28B.

The electricity theft likelihood determination unit 28B acquires the thermal image data and the captured image data from the imaging unit 18 (Step 300). The electricity theft likelihood determination unit 28B performs the image analysis on the thermal image data and the captured image data acquired in Step S300. The electricity theft likelihood determination unit 28B identifies the temperature information defined by the pixel value of the corresponding portion in the thermal image data for each of the plurality of chargers 10 and the plurality of electric vehicles 12 included in the captured image data by the image analysis. By such identification processing, the electricity theft likelihood determination unit 28B identifies the temperature information of each of the plurality of chargers 10 present in the EV charging station 2 and each of the electric vehicles 12 connected to the plurality of chargers 10 (Step S302).

Next, the electricity theft likelihood determination unit 28B executes processing of steps S304 to S328 for each charging set 15 of the charger 10 and the electric vehicle 12 connected to the charger 10.

Specifically, the electricity theft likelihood determination unit 28B determines whether or not the temperature of the charger 10 indicated by the temperature information identified in Step S302 is equal to or lower than the first predetermined temperature (for example, 30°C) (Step S304). When an affirmative determination is made in Step S304 (Step S304: Yes), the processing proceeds to Step S306. In Step S306, the electricity theft likelihood determination unit 28B estimates that the estimated charging state is "charging completion" (Step S306). Then, the electricity theft likelihood determination unit 28B identifies, as the estimated charging completion time, the time at which the temperature indicated by the temperature information of the charger 10 starts to decrease following a preceding increase (Step S308). Then, the processing proceeds to Step S314 described below.

On the other hand, when a negative determination is made in Step 304 (Step S304: No), the processing proceeds to Step S320. In Step S310, the electricity theft likelihood determination unit 28B determines whether or not the temperature of the charger 10 indicated by the temperature information is higher than the first predetermined temperature, and whether or not the temperature of the charger 10 has decreased by the second predetermined temperature (for example, 20°C) or more from the temperature at the predetermined time (for example, 10 minutes) earlier (Step S310). When an affirmative determination is made in Step S310 (Step S310: Yes), the processing proceeds to Step S306 described above.

When a negative determination is made in Step S310 (Step S310: No), the processing proceeds to Step S312. In Step S312, the electricity theft likelihood determination unit 28B estimates that the estimated charging state is "charging in progress" (Step S312). Then, the processing proceeds to Step S314.

In Step S314, the electricity theft likelihood determination unit 28B identifies the charging state of the charger 10 from the communication information (Step S314). In a case where the electric power supply amount per unit time included in the communication information corresponding to the same time as the time at which the thermal image data used to acquire the temperature information used to determine the estimated charging state is acquired in the communication log management information 26B is 0 kWh, the electricity theft likelihood determination unit 28B identifies "charging completion" as the charging state. In addition, in a case where the electric power supply amount per unit time included in the communication information corresponding to the same time as the time at which the thermal image data used to acquire the temperature information used to determine the estimated charging state is acquired is a value exceeding 0 kWh, the electricity theft likelihood determination unit 28B identifies "charging in progress" as the charging state.

Then, the electricity theft likelihood determination unit 28B determines whether or not the charging state identified in Step S314 is "charging completion" (Step S316). When a negative determination is made in Step S316 (Step S316: No), it is determined that the likelihood of electricity theft of the electric vehicle 12 included in the charging set 15 to be processed is "low" (Step S328).

When an affirmative determination is made in Step S316 (Step S316: Yes), the processing proceeds to Step S318. In Step S318, the electricity theft likelihood determination unit 28B determines whether or not the charging state identified in Step S314 matches the estimated charging state estimated in Step S306 or Step S312 (Step S318).

When an affirmative determination is made in Step S318 (Step S318: Yes), the processing proceeds to Step S320. In Step S320, the electricity theft likelihood determination unit 28B determines whether or not the time difference between the charging completion time indicated by the communication information and the estimated charging completion time identified in Step S308 is equal to or longer than the first time duration (for example, 10 minutes) (Step S320). When an affirmative determination is made in Step S320 (Step S320: Yes), the electricity theft likelihood determination unit 28B determines that the likelihood of electricity theft of the electric vehicle 12 included in the charging set 15 to be processed is "high" (Step S322).

When a negative determination is made in Step S320 (Step S320: No), the processing proceeds to Step S324. In Step S324, it is determined whether or not the time difference between the charging completion time indicated by the communication information and the estimated charging completion time identified in Step S308 is equal to or longer than the second time duration (for example, five minutes) (Step S324). When an affirmative determination is made in Step S324 (Step S324: Yes), the electricity theft likelihood determination unit 28B determines that the likelihood of electricity theft of the electric vehicle 12 included in the charging set 15 to be processed is "medium" (Step S326).

When a negative determination is made in Step S328 (Step S328: No), the electricity theft likelihood determination unit 28B determines that the likelihood of electricity theft of the electric vehicle 12 included in the charging set 15 to be processed is "low" (Step S328).

On the other hand, when a negative determination is made in Step S318 (Step S318: No), the processing proceeds to Step S330. In Step S330, the electricity theft likelihood determination unit 28B determines whether or not the time difference between the charging completion time indicated by the communication information and the estimated charging completion time identified in Step S308 is shorter than the first time duration (for example, 10 minutes) (Step S330). When an affirmative determination is made in Step S330 (Step S330: Yes), the processing proceeds to Step S332.

In Step S332, the electricity theft likelihood determination unit 28B determines whether or not the elapsed time from the charging completion time is equal to or longer than the second time duration (for example, five minutes) (Step S332). When an affirmative determination is made in Step S332 (Step S332: Yes), the processing proceeds to Step S326. In Step S326, the electricity theft likelihood determination unit 28B determines that the likelihood of electricity theft of the electric vehicle 12 included in the charging set 15 to be processed is "medium" (Step S326).

When a negative determination is made in Step S332 (Step S332: No), the processing proceeds to Step S328. In Step S328, the electricity theft likelihood determination unit 28B determines that the likelihood of electricity theft of the electric vehicle 12 included in the charging set 15 to be processed is "low" (Step S328).

When a negative determination is made in Step S330 (Step S330: No), the processing proceeds to Step S322. In Step S322, the electricity theft likelihood determination unit 28B determines that the likelihood of electricity theft of the electric vehicle 12 included in the charging set 15 to be processed is "high" (Step S322).

The electricity theft likelihood determination unit 28B executes the processing of steps S304 to S328 for each charging set 15 of the charger 10 and the electric vehicle 12 connected to the charger 10. Therefore, the electricity theft likelihood determination unit 28B determines the likelihood of electricity theft for each electric vehicle 12 included in each of a plurality of charging sets 15.

Next, an example of a detailed flow of the electricity theft vehicle identification processing executed by the electricity theft vehicle identification unit 28C, which is represented by Step S212 in FIG. 7, will be described.

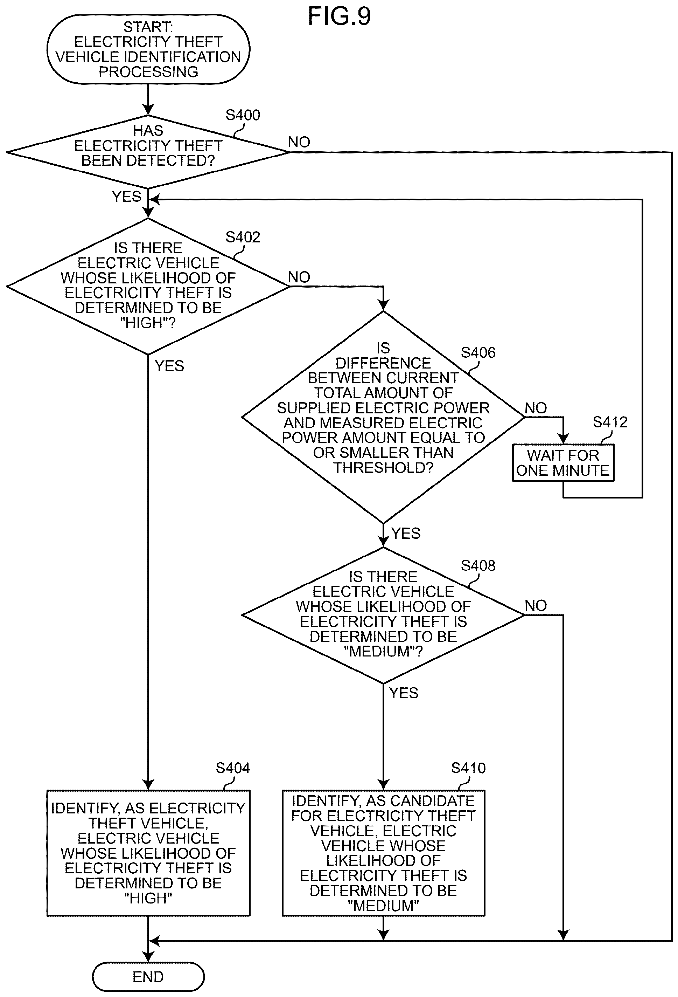

FIG. 9 is a flowchart illustrating an example of the flow of the electricity theft vehicle identification processing executed by the electricity theft vehicle identification unit 28C.

The electricity theft vehicle identification unit 28C determines whether or not the electricity theft has been detected by the electricity theft detection unit 28A (Step S400). When a negative determination is made in Step S400 (Step S400: No), this routine ends. When an affirmative determination is made in Step S400 (Step S400: Yes), the processing proceeds to Step S402.

In Step S402, the electricity theft vehicle identification unit 28C determines whether or not there is an electric vehicle 12 whose likelihood of electricity theft is determined to be "high" by the electricity theft likelihood determination unit 28B (Step S402). When an affirmative determination is made in Step S402 (Step S402: Yes), the processing proceeds to Step S404. In Step S404, the electricity theft vehicle identification unit 28C identifies, as the electricity theft vehicle, the electric vehicle 12 whose likelihood of electricity theft is determined to be "high" (Step S404). Then, this routine ends.

When a negative determination is made in Step S402 (Step S402: No), the processing proceeds to Step S406. In Step S406, the electricity theft vehicle identification unit 28C determines whether or not the difference between the current total amount of the supplied electric power and the measured electric power amount is equal to or smaller than the threshold (Step S406). When an affirmative determination is made in Step S406 (Step S406), the processing proceeds to Step S408.

In Step S408, the electricity theft vehicle identification unit 28C determines whether or not there is an electric vehicle 12 whose likelihood of electricity theft is determined to be "medium" by the electricity theft likelihood determination unit 28B (Step S408). When an affirmative determination is made in Step S408 (Step S408: Yes), the processing proceeds to Step S410. In Step S410, the electricity theft vehicle identification unit 28C identifies, as the candidate for the electricity theft vehicle, the electric vehicle 12 whose likelihood of electricity theft is determined to be "medium" (Step S410). Then, this routine ends.

On the other hand, when a negative determination is made in Step S406 (Step S406: No), the processing proceeds to Step S412. In Step S412, the electricity theft vehicle identification unit 28C waits for a predetermined time (for example, one minute) (Step S412), and returns to Step S402 described above.

Next, an example of a detailed flow of the identification result output processing executed by the output control unit 28D, which is represented by Step S214 in FIG. 7, will be described.

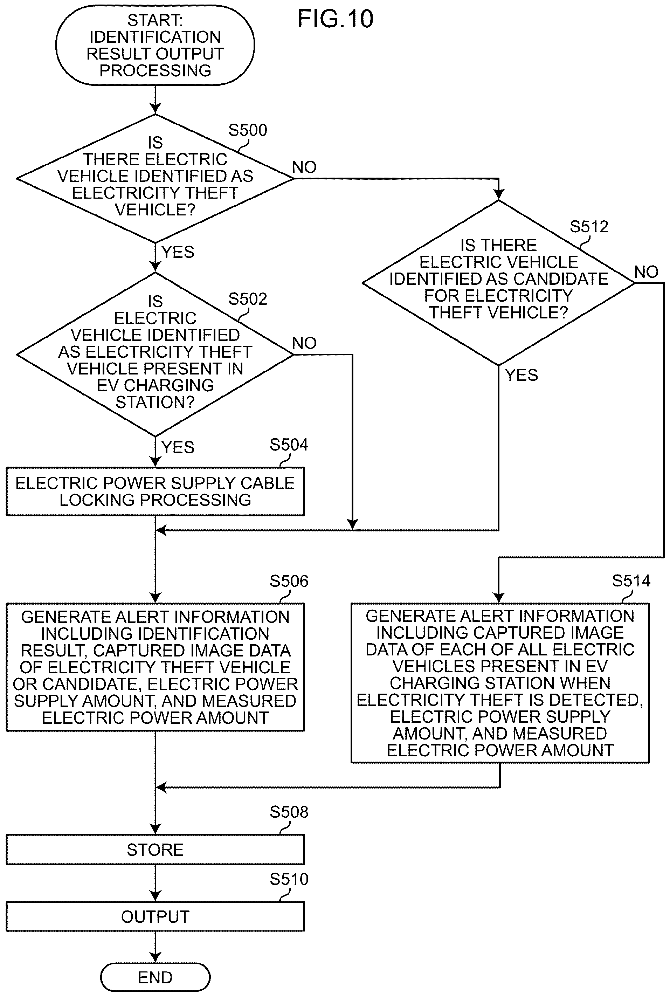

FIG. 10 is a flowchart illustrating an example of the flow of the identification result output processing executed by the output control unit 28D.

The output control unit 28D determines whether or not there is an electric vehicle 12 identified as the electricity theft vehicle by the electricity theft vehicle identification unit 28C (Step S500). When an affirmative determination is made in Step S500 (Step S500: Yes), the processing proceeds to Step S502.

In Step S502, the output control unit 28D determines whether or not the electric vehicle 12 identified as the electricity theft vehicle is present in the EV charging station 2 (Step S502). For example, the output control unit 28D performs image analysis on the captured image data captured by the visible light camera unit 18A by a known image analysis method, and determines whether or not the electric vehicle 12 having the identification information corresponding to the vehicle ID of the electric vehicle 12 identified as the electricity theft vehicle is included in the captured image data.

When an affirmative determination is made in Step S502 (Step S502: Yes), the processing proceeds to Step S504. In Step S504, the output control unit 28D locks the electric power supply cable connecting the electric vehicle 12 identified as the electricity theft vehicle and the charger 10 so as not to be disconnected (Step S504).

Then, the output control unit 28D generates the alert information including the identification result of the electricity theft vehicle identification unit 28C, the captured image data from the charging start time to the charging completion time of the electric vehicle 12 identified as the electricity theft vehicle or the candidate for the electricity theft vehicle in Step S512 described below, the electric power supply amount indicated by the communication information, and the measured electric power amount (Step S506).

The output control unit 28D stores the alert information generated in Step S506 or Step S514 described below in the storage unit 26 (Step S508), and outputs the alert information to the management server 3 or the like (Step S510). Then, this routine ends.

On the other hand, when a negative determination is made in Step S500 (Step S500: No), the processing proceeds to Step S512. In Step S512, the output control unit 28D determines whether or not there is an electric vehicle 12 identified as the candidate for the electricity theft vehicle by the electricity theft vehicle identification unit 28C (Step S512). When an affirmative determination is made in Step S512 (Step S512: Yes), the processing proceeds to Step S506. When a negative determination is made in Step S512 (Step S512: No), the processing proceeds to Step S514.

In Step S514, the output control unit 28D identifies all the electric vehicles 12 present in the EV charging station 2 when the electricity theft is detected. Similarly to the above, it is sufficient if the output control unit 28D identifies the electric vehicle 12 by the image analysis of the captured image data captured by the visible light camera unit 18A. Then, the output control unit 28D generates the alert information including the captured image data from the charging start time to the charging completion time of each of all the electric vehicles 12 present in the EV charging station 2 when the electricity theft is detected by the electricity theft detection unit 28A, the electric power supply amount indicated by the communication information, and the measured electric power amount (Step S514). Then, the processing proceeds to Step S508 described above.

As described above, the electricity theft identification device 20 of the present embodiment includes the electricity theft detection unit 28A, the electricity theft likelihood determination unit 28B, and the electricity theft vehicle identification unit 28C. The electricity theft detection unit 28A detects the electricity theft based on the difference between the total amount of the electric power supplied to the plurality of electric vehicles 12 that is calculated based on the communication information including the electric power supply amount of the electric power supplied to each of the electric vehicles 12 connected to the plurality of chargers 10 and the measured electric power amount measured by the electric power meter 16 that measures the amount of the electric power supplied from the power supply 14 to the plurality of chargers 10. The electricity theft likelihood determination unit 28B determines the likelihood of electricity theft of each of the electric vehicles 12 connected to the plurality of chargers 10 based on the temperature information of at least one of the charger 10 and the electric vehicle 12. When the electricity theft is detected, the electricity theft vehicle identification unit 28C identifies, as the electricity theft vehicle, the electric vehicle 12 whose likelihood of electricity theft is determined to be the first level or higher.

According to the related art, there is known a system that determines whether or not the electricity theft has occurred by determining whether or not the measured electric power amount measured by the electric power meter 16 is equal to or greater than the threshold. However, in the related art, it is possible to detect the electricity theft, but it is difficult to identify which electric vehicle 12 is the electricity theft vehicle.

On the other hand, in the electricity theft identification device 20 of the present embodiment, the electricity theft likelihood determination unit 28B determines the likelihood of electricity theft of each of the electric vehicles 12 connected to the plurality of chargers 10 based on the temperature information of at least one of the charger 10 and the electric vehicle 12. Then, when the electricity theft is detected, the electricity theft vehicle identification unit 28C identifies, as the electricity theft vehicle, the electric vehicle 12 whose likelihood of electricity theft is determined to be the first level or higher. Therefore, the electricity theft vehicle can be identified by the electricity theft identification device 20 of the present embodiment.

Accordingly, the electricity theft identification device 20 of the present embodiment can identify the electricity theft vehicle.

In the present embodiment, a mode in which the electricity theft identification device 20 includes the electricity theft detection unit 28A, the electricity theft likelihood determination unit 28B, the electricity theft vehicle identification unit 28C, and the output control unit 28D has been described as an example. That is, in the present embodiment, a mode in which the electricity theft identification device 20 detects the electricity theft based on the difference between the total amount of the electric power supplied to the plurality of electric vehicles 12 calculated based on the communication information and the measured electric power amount measured by the electric power meter 16 that measures the amount of the electric power supplied from the power supply 14 to the plurality of chargers 10, determines the likelihood of electricity theft of each of the electric vehicles 12 connected to the plurality of chargers 10 based on the temperature information of at least one of the charger 10 and the electric vehicle 12, and identifies, as the electricity theft vehicle, the electric vehicle 12 whose likelihood of electricity theft is determined to be the first level or higher when the electricity theft is detected has been described. In addition, a mode in which the electricity theft identification device 20 outputs the identification result of the electricity theft vehicle identification unit 28C has been described.

However, as described above, at least one of one or more functional units included in the processing unit 28 of the electricity theft identification device 20 may be mounted on the external information processing device communicably connected to the processing unit 28 via the network NW or the like.

For example, the management server 3 may include the electricity theft detection unit 28A, the electricity theft likelihood determination unit 28B, and the electricity theft vehicle identification unit 28C.

In this case, the processing unit 28 of the electricity theft identification device 20 transmits the camera log management information 26A, the communication log management information 26B, and the measured electric power amount management information 26C to the management server 3 at each predetermined timing such as each timing at which these pieces of information are updated. In addition, the processing unit 28 of the electricity theft identification device 20 transmits the time at which the communication information is received and the communication information to the management server 3 at each predetermined timing such as each timing at which the communication information is received from each of the plurality of chargers 10.

The electricity theft detection unit 28A, the electricity theft likelihood determination unit 28B, and the electricity theft vehicle identification unit 28C provided in the management server 3 may execute the same processing as described above. Then, it is sufficient if the electricity theft vehicle identification unit 28C outputs an identification result of an electricity theft vehicle to the electricity theft identification device 20.

Next, a hardware configuration of the electricity theft identification device 20 of the present embodiment will be described.

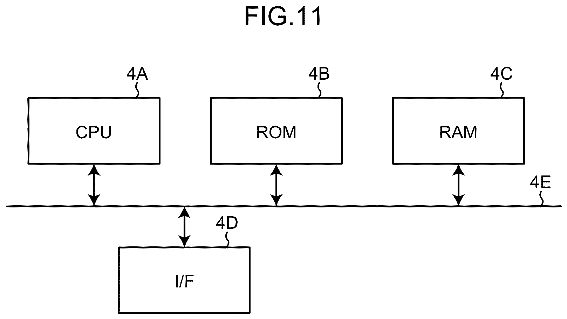

FIG. 11 is a block diagram illustrating a hardware configuration example of the electricity theft identification device 20 of the present embodiment.

The electricity theft identification device 20 of the present embodiment includes a control device such as a central processing unit (CPU) 4A, a storage device such as a read only memory (ROM) 4B and a random access memory (RAM) 4C, an interface (I/F) 4D that is connected to a network to perform communication, and a bus 4E that connects the respective units.

A program executed by the electricity theft identification device 20 of the present embodiment is provided by being incorporated in the ROM 4B or the like in advance.

The program executed by the electricity theft identification device 20 of the present embodiment may be provided as a computer program product by being recorded in a computer-readable recording medium such as a compact disk read only memory (CD-ROM), a flexible disk (FD), a compact disk recordable (CD-R), and a digital versatile disk (DVD) as a file in an installable format or an executable format.

Furthermore, the program executed by the electricity theft identification device 20 of the present embodiment may be stored in the computer connected to a network such as the Internet, and provided by being downloaded via the network. In addition, the program executed by the electricity theft identification device 20 of the present embodiment may be provided or distributed via the network such as the Internet.

The program executed by the electricity theft identification device 20 of the present embodiment can cause the computer to function as the electricity theft identification device 20 described in the present embodiment. In the computer, the CPU 4A can read the program from the computer-readable storage medium onto a main storage device and execute the program.

Although the embodiments of the present disclosure have been described, the above-described embodiments have been presented as examples and are not intended to limit the scope of the invention. The above-described novel embodiments can be implemented in various other forms, and various omissions, substitutions, and changes can be made without departing from the gist of the invention. The above-described embodiments are included in the scope and gist of the invention and are included in the invention described in the claims and the equivalent scope thereof.

### EXPLANATIONS OF LETTERS OR NUMERALS

- 10: CHARGER
- 12: ELECTRIC VEHICLE
- 14: POWER SUPPLY
- 16: ELECTRIC POWER METER
- 18: IMAGING UNIT
- 20: ELECTRICITY THEFT IDENTIFICATION DEVICE
- 28A: ELECTRICITY THEFT DETECTION UNIT
- 28B: ELECTRICITY THEFT LIKELIHOOD DETERMINATION UNIT
- 28C: ELECTRICITY THEFT VEHICLE IDENTIFICATION UNIT
- 28D: OUTPUT CONTROL UNIT

## Claims

1. An electricity theft identification method executed by an electricity theft identification device, the electricity theft identification method comprising:
an electricity theft detection step of detecting electricity theft based on a difference between a total amount of electric power supplied to a plurality of electric vehicles and a measured electric power amount, the total amount being calculated based on communication information including an amount of electric power supplied to each of the electric vehicles connected to a plurality of chargers, the measured electric power amount being measured by an electric power meter configured to measure an amount of the electric power supplied from a power supply to the plurality of chargers;
an electricity theft likelihood determination step of determining likelihood of electricity theft of each of the electric vehicles connected to the plurality of chargers based on temperature information of at least one of the charger and the electric vehicle; and
an electricity theft vehicle identifying step of identifying, as an electricity theft vehicle, the electric vehicle whose likelihood of electricity theft is determined to be a first level or higher when the electricity theft is detected.

2. The electricity theft identification method according to claim 1, wherein
the electricity theft likelihood determination step
determines the likelihood of electricity theft of each of the electric vehicles connected to the plurality of chargers based on a result of comparison between an estimated charging state of each of the plurality of chargers estimated based on the temperature information and a charging state of each of the plurality of chargers indicated by the communication information.

3. The electricity theft identification method according to claim 2, wherein
the electricity theft likelihood determination step:
determines, for the electric vehicle connected to the charger in which the charging state and the estimated charging state both indicate charging completion among the plurality of chargers, that the likelihood of electricity theft is higher as a time difference between a charging completion time indicated by the communication information and an estimated charging completion time estimated from the temperature information is larger; and
determines, for the electric vehicle connected to the charger in which the charging state indicates charging completion and the estimated charging state indicates charging in progress, that the likelihood of electricity theft is higher as an elapsed time from the charging completion time indicated by the communication information is longer.

4. The electricity theft identification method according to claim 1, wherein
the electricity theft vehicle identifying step
identifies, as a candidate for the electricity theft vehicle, the electric vehicle whose likelihood of electricity theft is determined to be lower than the first level and equal to or higher than a second level lower than the first level.

5. The electricity theft identification method according to claim 1, wherein
the electricity theft identification method comprises an output control step of outputting an identification result of the electricity theft vehicle identifying step.

6. An electricity theft identification device comprising:
an electricity theft detection unit configured to detect electricity theft based on a difference between a total amount of electric power supplied to a plurality of electric vehicles and a measured electric power amount, the total amount being calculated based on communication information including an amount of electric power supplied to each of the electric vehicles connected to a plurality of chargers, the measured electric power amount being measured by an electric power meter configured to measure an amount of the electric power supplied from a power supply to the plurality of chargers;
an electricity theft likelihood determination unit configured to determine likelihood of electricity theft of each of the electric vehicles connected to the plurality of chargers based on temperature information of at least one of the charger and the electric vehicle; and
an electricity theft vehicle identification unit configured to identify, as an electricity theft vehicle, the electric vehicle whose likelihood of electricity theft is determined to be a first level or higher when the electricity theft is detected.

7. An electricity theft identification program for causing a computer to execute:
a step of detecting electricity theft based on a difference between a total amount of electric power supplied to a plurality of electric vehicles and a measured electric power amount, the total amount being calculated based on communication information including an amount of electric power supplied to each of the electric vehicles connected to a plurality of chargers, the measured electric power amount being measured by an electric power meter configured to measure an amount of the electric power supplied from a power supply to the plurality of chargers;
a step of determining likelihood of electricity theft of each of the electric vehicles connected to the plurality of chargers based on temperature information of at least one of the charger and the electric vehicle; and
a step of identifying, as an electricity theft vehicle, the electric vehicle whose likelihood of electricity theft is determined to be a first level or higher when the electricity theft is detected.
